# EUROPEAN PATENT APPLICATION

(11) **EP 1 607 206 A1**
(43) Date of publication of application: **21.12.2005**
(21) Application number: 04703483.0
(22) Date of filing: 20.01.2004
(51) Int. Cl.: B29C 45/26

(54) **INJECTION MOLDING DIE, INJECTION MOLDING METHOD, AND WELDLESS MOLDED PRODUCT**

(30) Priority: 21.01.2003 JP 2003012183; 27.05.2003 JP 2003149920; 29.05.2003 JP 2003152638
(71) Applicant: Techno Polymer Co., Ltd., Tokyo 104-0041 (JP)
(72) Inventor: Kurihara, Fumio, Tokyo 104-0031 (JP); Nagakusa, Haruto, Tokyo 104-0031 (JP)
(74) Representative: TBK-Patent
(86) International application number: PCT/JP2004/000438
(87) International publication number: WO 2004/065096

(57) **Abstract**

A mold for injection molding which is comprised of a mold cavity having an inside shape fit to an outside shape of a target product and a temporary space being communicated with the mold cavity and is eliminated before an amount of a molten material being injected to the mold cavity reaches the capacity of the mold cavity.

Said mold cavity has two or more gates that can be controlled of start of injection respectively, and, said temporary space is a ditch 126 which has an eliminator to eliminate itself and is set on the surface of the mold cavity where it connects opening portions of the two gates 111 and 112 that are mutually adjacent, and, the second gate 112 is set to be opened after a melt-front of a molten resin injected from the first gate 111 reaches the position of said second gate112, a molten resin being progressed in the ditch 126 is pushed and returned to the mold cavity by using the eliminator, and, said eliminator is started when a melt-front of a molten resin from said first gate 111 reaches the position of said second gate 112.

## Description

### FIELD OF THE INVENTION

The present invention relates to injection molding technologies that can mold a product of no welds though using a mold having two or more gates.

Also, the present invention relates to injection molding technologies that can mold a product of no welds though a target shape of a molded product has a hole such as a through hole.

And also, the present invention relates to injection molding technologies that can mold a product of no welds though a target shape of a molded product has a portion being formed by a branch and a confluence of a molten resin.

### RERATED ART

A weld or a weld-line characterized by both the defect of an external and the defect of strength is caused in a portion of a product molded by an injection molding. That is, the weld or the weld-line is caused in a part where a melt front of a molten resin injected to a mold cavity is joined.
[1] A mold for injection molding having two or more gates
   For instance, when a molten resin is injected into a mold cavity from plural gates, confluence of the resins' melt-front is caused.
   In a case where a mold having plural gates is utilized for an injection molding, the following technologies of (a), (b), and (c) that can mold a product of no-weld are known.
   (a) A technology that opens a second-order gate to continue an injection molding after the melt-front of the molten resin injected from a first-order gate reaches the position of the second-order gate adjacent to the first-order gate
      This technology is described in S57-45039-A/JP, S63-237920-A/JP, H3-288609-A/JP, H4-325219-A/JP, H6-71683-A/JP, and H6-238704-A/JP. In this technology, the molten resin injected from the second-order gate is added to the behind of the molten resin injected from the first-order gate adjacent to the second-order gate. Therefore, the two melt-fronts are not joined and a weld or a weld-line is not caused.
   (b) A technology that gradually opens a second-order gate to continue an injection molding and gradually increase an amount of molten resin for preventing a flow mark after the melt-front of the molten resin injected from a first-order gate reaches the position of the second-order gate adjacent to the first-order-gate
      This technology is described in H6-64002-A/JP and H6-254895-A/JP. In this technology, the flow velocity of the molten resin injected from the second-order gate to be added to the behind of the molten resin injected from the first-order gate is gradually increased. Therefore, the difference between the two molten resins' velocities is extent that can be disregarded and a flow mark is not caused.
   (c) A technology that opens a second-order gate to continue an injection molding after the melt-front of the molten resin injected from a first-order gate reaches the position of the second-order gate adjacent to the first-order-gate and that at the same time closes the first-order gate for preventing a backflow of the molten resin
      This technology is described in H6-344398-A/JP. In this technology, as the first-order gate is shut, the molten resin injected from the second-order gate is prevented from flowing in the direction of the first-order gate.
[2] A molded product having a hole such as a through hole
   When a shape of a target product has a through hole, the body that has the outside shape fit to the inside shape of the through hole is set at the predetermined position in a mold cavity. And a melt front of an injected resin is branched on the upstream side of the body and then joined on the downstream side thereof and thereby a weld is caused.
   As the example of the product having the through hole, a product having keyholes in thin state of board such as a casing of a calculator or a cellular phone can be named.
   A technology that prevents a weld being caused in a molded product in which a through hole is shaped is described in H5-104582-A/JP. In the H5-104582-A/JP, when an injected resin is filled in a mold cavity but is not still solidified, the punch pin of its outside shape fitted to the inside shape of the through hole is inserted into the predetermined position in the mold cavity corresponding to the through hole. Therefore, a product of no-weld is molded.
[3] An injection molding where a branch and a confluence of a molten resin is inevitably caused
   If a mold cavity is designed so as to avoid a confluence of an injected molten resin, a weld is not caused in a molded product. However, there is a product with a shape, such as a loop part, that a branch and a confluence of an injected molten resin are inevitably caused. When a product with a loop part is molded, an injected molten resin is branched on the upstream side of the corresponding position of the loop part and then joined on the downstream side thereof. Therefore, a weld is caused inevitably.
   In a case where a confluence of an injected molten resin is inevitably caused because of a shape of a target product, the following technologies of (d) and (e) that molds a product of no-weld are known.
(d) A product with a through hole of comparatively small diameter
   A technology for inserting a punch pin having an outside shape thereof fit to an inside shape of a through hole to a predetermined position situated in a mold cavity when a resin is filled in the mold cavity but not still solidified
   This technology is described in H5-104582-A/JP. According to this technology, a melt front of an injected molten resin is not joined therefore a product of no-weld is molded.
(e) A product with a through hole of comparatively large diameter
   A technology for causing a confluence in a rib space for gas exhaust which is positioned at a back side (a confluence side) of a punch pin having an outside shape thereof fit to an inside shape of a through hole
   This technology is described in H9-207178-A/JP. According to this technology, a solidified resin in the rib space is cut off therefore a final product has no-weld.

### DISCLOSRE OF THE INVENTION

The present invention is an injection molding technology for filling a molten resin into a mold cavity to mold a product, and is particularly characterized by a temporary space. This temporary space is communicated with the mold cavity and is eliminated before an amount of an injected molten resin reaches the capacity of the mold cavity.

### [1] A MOLD FOR INJECTION MOLDING HAVING TWO OR MORE GATE

In an afore-mentioned technology (a), a product without a weld can be molded. However, the flow velocity of the molten resin injected from the second-order gate to be added to the behind of the molten resin injected from the first-order gate differs from that of the molten resin injected from the first-order gate therefore there is a problem of causing a flow mark easily.

In an afore-mentioned technology (b), it is explained that a weld and a flow mark are prevented from being caused. However, there is a difficult technological problem of controlling a gate of injection molding to open gradually.

In an afore-mentioned technology (c), it is explained that the product without a weld can be molded and that the molten resin injected from the second-order gate is prevented from back flow. However, the first-order gate is closed comparatively earlier. As a result, there is a possibility that the molten resin injected from the first-order gate is not completely spread to each portion of the mold cavity that should be filled by the resin injected from the first-order gate. This causes a defect of the molded product. Also, if this defective molding is intended to be prevented, a shape of a target product and a degree of freedom of a design of a gate position are greatly restricted.

The object of the present invention, which relates to a mold having two or more gates, is to prevent a weld. Also, another object of the present invention, which relates to a mold having two or more gates, is to prevent a flow mark easily and surely. And also, another object of the present invention, which relates to a mold having two or more gates, is to prevent a back flow of a resin injected from the second-order gate, which is added to a behind of a resin injected from the first-order gate, without any restriction about a shape of a target product and a degree of freedom of a design of a gate position.

These objects can be achieved by the following technologies of from [1-1] to [1-4].

### [1-1]

A mold for injection molding comprising:
a mold cavity having an inside shape fitted to an outside shape of a target product;
(a junk cavity being communicated with the mold cavity;) and
a temporary space being communicated with the mold cavity and is eliminated before an amount of a molten resin being injected to the mold cavity reaches the (total) capacity of the mold cavity (and the junk cavity);
wherein said mold cavity has two or more gates that can be controlled of start of injection respectively; said temporary space is a ditch having an eliminator to eliminate the ditch and being set on the surface of the mold cavity where it connects opening portions of the two gates that are mutually adjacent; a second gate which is one of said mutually adjacent two gates is set to be opened after a melt-front of a molten resin injected from a first gate being the other of said two gates reaches the position of said second gate; a molten resin being progressed in the ditch is pushed and returned to the mold cavity by using the eliminator; said eliminator is started when a melt-front of a molten resin from said first gate reaches the position of said second gate.

Said junk cavity is a cavity being communicated with the mold cavity to accommodate the overflowing surplus resin from the mold cavity. Said junk cavity may be positioned at the far downstream side of the gate from which a molten resin is injected.

Said ditch has a function of so-called flow leader. In other words, because the ditch part is thicker than the other portions, the temperature decrease of a molten material along the ditch part is more gradual than the other portions therefore the velocity of a molten material along the ditch part is faster than that of the other portions.

Said ditch can be equipped on the same side surface as the gate opening. Or, said ditch can be equipped on the opposite side surface of the gate opening. The surface where the beauty of externals is not demanded in the target product is preferable.

Where said ditch is set on the same side surface as the gate opening, the edge of the ditch can be communicated with the gate opening, and also, can be separated a little from the gate opening.

Said ditch is configured as a longitudinal shape to be able to function as a flow leader. The longitudinal shape can be a straight line, and also, can be a curve line having an arbitrary curvature. Also, the width of the ditch and/or depth of the ditch and/or cross sectional shape may not be the same. That is, a proper shape can be adopted according to the shape of a target product or to a level etc. of a function demanded as a flow leader.

Because the flow speed of the molten material in said ditch connecting the positions of said mutually adjacent two gates (henceforth the one is "the first-order gate" and the other is "the second-order gate") becomes high-speed, the time required for the molten material to reach from the first-order gate to the position of the second-order gate can be shortened. In other words, if a target time is fixed, the interval between the first-order gate and the second-order gate can be longer. Therefore, a thin product or a big product that has a large flow resistance can be molded with a mold cavity having a comparatively small number of gates.

Also, because the flow speed of the molten material in said ditch becomes high-speed as described above, the difference between velocities of the molten materials from said two gates becomes small as a result the causing of a flow mark is completely prevented.

As described above, said second-order gate is set to be opened after the melt-front of the molten material from said first-order gate reaches the position of said second-order gate (preferably, "immediately after"). In other words, the second-order gate is opened, so that the molten material from there is added to the behind of the molten material injected from the first-order gate.

The following techniques of (i), (ii) and (iii) etc, each of which starts the injection from the said second-order gate at the above mentioned time, are known.

### (i) Detection of pressure

A technique that detects a pressure of the vicinity of the opening of said second-order gate and starts the injection of a molten material when the detected pressure reaches the designated value corresponding to the reach of the molten material

### (ii) Elapsed time

A technique that starts the injection of a molten material from said second-order gate when the predetermined time has passed since the injection of a molten material from said first-order gate started

Here, the said predetermined time is a required time that the melt-front of the molten material injected from said first-order gate and progressed along the said ditch passes the position of the opening of the said second-order gate.

### (iii) Screw position of the injection molding machine

A technique that starts the injection of a molten material from said second-order gate when the screw position of the injection molding machine becomes the designated position

Here, the said designated position is a position that the melt-front of the molten material pushed out by the screw to the mold cavity via said first-order gate and progressed along the said ditch passes the position of the opening of said second-order gate.

The words of said first-order gate and second-order gate provide a relative relation between two gates. Therefore, it is naturally possible to assume said second-order gate to be said first-order gate in the relation to another gate, and set such another gate as the second-order gate to the assumed first-order gate. It is also naturally possible to set a further gate similarly.

Moreover, it is also naturally possible to set two or more second-order gates positioned in a different direction respectively for the same first-order gate.

Said eliminator can be embodied as a mechanism to move the bottom of said ditch to the direction of the internal of the mold cavity and to eliminate the ditch.

When said ditch is eliminated, the thick portion corresponding to the ditch is not formed in the product to be molded. As a result a sink mark which is caused at a thick portion is prevented.

Also, the molten material in said ditch flows back into the mold cavity when the ditch is eliminated. As a result a molten material is completely spread to each portion of the mold cavity that should be filled by the material injected from said first-order gate and thereby the defect of the molded product is prevented.

The above-mentioned effect, that is, the effect that the defect of the molded product can be prevented because a molten material is completely spread to each portion of the mold cavity that should be filled by the material injected from said first-order gate can be achieved by opening or closing said first-order gate independently from said second-order gate. For example, in the said H6-344398-A/JP, said first-order gate is closed at the same time when said second-order gate is opened as a result the trouble that the molten material being injected from the first-order gate is not completely spread to each of the portions to be filled by the material from the first-order gate may be caused. However, in this invention, such trouble is not caused.

Also, the molten material in said ditch flows back into the mold cavity when the ditch is eliminated. As a result the portion of the mold cavity that is filled by the material injected from said first-order gate becomes high pressure and thereby the molten material injected from said second-order gate is prevented from flowing backward in the direction of the first-order gate.

### [1-2]

A mold for injection molding comprising:
a mold cavity having an inside shape fitted to an outside shape of a target product;
(a junk cavity being communicated with the mold cavity;) and
a temporary space being communicated with the mold cavity and is eliminated before an amount of a molten resin being injected to the mold cavity reaches the (total) capacity of the mold cavity (and the junk cavity);
wherein said temporary space is a ditch having an eliminator to eliminate the ditch and being set on the surface of the mold cavity where it is in the longitudinal direction from the opening portion of the gate of the mold cavity; a molten resin being progressed in the ditch is pushed and returned to the mold cavity by using the eliminator; said eliminator is started when a melt-front of a molten resin from said gate reaches the end of the ditch.

In this [1-2], the number of gates is arbitrary. For example, only one gate may be equipped in said mold cavity. This [1-2] is characterized by said eliminator that eliminate said ditch after the ditch carried out the function of the flow leader.

In this [1-2], the number of ditches that are set from the same gate to several directions is not restricted.

Said ditch can be equipped on the same side surface as the gate opening. Or, said ditch can be equipped on the opposite side surface of the gate opening. The surface where the beauty of externals is not demanded in the target product is preferable.

Where said ditch is set on the same side surface as the gate opening, the one edge of the ditch can be communicated with the gate opening, and also, can be separated a little from the gate opening.

Said ditch is configured as a longitudinal shape to be able to function as a flow leader. The longitudinal shape can be a straight line, and also, can be a curve line having an arbitrary curvature. Also, the width of the ditch and/or depth of the ditch and/or cross sectional shape may not be the same. That is, a proper shape can be adopted according to the shape of a target product or to a level etc. of a function demanded as a flow leader.

As stated in the above description, the molten material in said ditch flows back into the mold cavity when the ditch is eliminated. Therefore, when said ditch is eliminated, the empty capacity for accommodating the molten material from the ditch is required in the mold cavity. In other words, the volume (length, depth, width, and cross-sectional shape, etc,) of the ditch is designed so as to be able to have the said empty capacity in consideration of the size of the mold cavity.

### [1-3]

A method of injection molding by using a mold wherein a mold cavity having an inside shape fitted to an outside shape of a target product, (a junk cavity being communicated with the mold cavity,) and a temporary space being communicated with the mold cavity and is eliminated before an amount of a molten resin being injected to the mold cavity reaches the (total) capacity of the mold cavity (and the junk cavity) are included, and wherein said mold cavity has two or more gates that can be controlled of start of injection respectively, said temporary space is a ditch having an eliminator to eliminate the ditch and being set on the surface of the mold cavity where it connects opening portions of the two gates that are mutually adjacent, said method comprising the steps of:
opening a first gate which is one of said mutually adjacent two gates to inject a molten resin into the said mold cavity;
opening a second gate which is the other of said mutually adjacent two gates after the melt-front of the molten resin from the first gate reaches the position of the second gate to inject a molten resin into the said mold cavity; and
eliminating said ditch when the melt-front of the molten resin from the first gate reaches the position of the second gate to push and return the molten resin being progressed in the ditch into the mold cavity.

### [1-4]

A method of injection molding by using a mold wherein a mold cavity having an inside shape fitted to an outside shape of a target product, (a junk cavity being communicated with the mold cavity,) and a temporary space being communicated with the mold cavity and is eliminated before an amount of a molten resin being injected to the mold cavity reaches the (total) capacity of the mold cavity (and the junk cavity) are included, and wherein said temporary space is a ditch having an eliminator to eliminate the ditch and being set on the surface of the mold cavity where it is in the longitudinal direction from the opening portion of the gate of the mold cavity, said method comprising the steps of:
opening a gate to inject a molten resin into the said mold cavity;
eliminating said ditch when a melt-front of a molten resin from said gate reaches the end of the ditch to push and return the molten resin being progressed in the ditch into the mold cavity.

### MOLDING MATERIAL

The blending material of 100 parts by mass of polymer, 0.1 to 10 parts by mass of the metallic pigment, and 1 to 100 parts by mass of the bulking agent can be utilized as a molding material.

A weld-line comes to stand out remarkably when the metallic pigment is in the above-mentioned range. Because an optical anisotropy that comes from the difference of the orientations between the metallic pigment and the other ingredients is large in the weld-line. However, a weld-line can be prevented being caused by using the techniques of this invention. Therefore, a product of excellent metallic externals and no-weld can be molded.

As examples of polymers for the molding material of the present invention, thermoplastic resins, thermoplastic elastomers, thermosetting resins, natural rubbers and synthetic rubbers can be conceivable.

Here, as examples of the thermoplastic resins, for example, a mixture of one or more polymers, such as styrene resins (e.g., polystyrene, butadiene-styrene copolymer, acrylonitrile-styrene copolymer, acrylonitrile-butadiene-styrene copolymer), ABS resins, AES resins, AAS resins, polyethylene, polypropylene, ethylene-propylene resins, ethylene-ethylacrylate resins, polyvinyl chloride, polyvinylidene chloride, polybutene, polycarbonate, polyacetal, polyphenylene oxide, polymethylmethacrylate, saturated polyester resins (e.g., hydroxycarboxylic acid condensates like polylactic acid, condensates of diol and dicarboxylic acid, such as polybutylene succinate), polyamide resins, fluorocarbon resins, polysulfone, polyether sulfone, polyarylate, polyether ether ketone, and liquid-crysal polymer can be named.

Among these thermoplastic resins, polystyrene, butadiene-styrene copolymer, acrylonitrile-styrene copolymer, ABS resins, AES resins, AAS resins, polyethylene, polypropylene, polyvinyl chloride, saturated polyester resins, and polyamide resins are preferable.

Also, as examples of the thermoplastic elastomers, for example, styrene thermoplastic elastomers (abbreviated as SBCs. Hereinafter abbreviated is indicated in parenthesis), olefine thermoplastic elastomers (TPOs), urethane thermoplastic elastomers (TPUs), ester thermoplastic elastomers (TPEEs), and amide thermoplastic elastomers (TPAEs) according to the classification by hard segment chemical composition can be named. In addition to the above, polyvinyl chloride thermoplastic elastomers (TPVCs), homopolymer type syndiotactic 1,2-polybutadiene, ion cluster type thermoplastic elastomers (ionomers), and fluorinated thermoplastic elastomers containing fluorocarbon resins as arrester blocks can be named. As such thermoplastic elastomers, a mixture of one or more of these polymers can be named.

Also, as examples of the thermosetting resins, for example, epoxy resins, acrylic resins, urethane resins, epoxy-urethane resins, and acrylic urethane resins can be named.

As examples of the metallic pigments, for example, board pigments, aluminum pigments and the glass pigments can be named.

As examples of the bulking agent, for example, mica, talc, wollastonite, glass bead, milled fiber, and the glass fiber can be named.

### [2] A MOLDED PRODUCT HAVING A HOLE SUCH AS A THROUGH HOLE

In the technology of the H5-104582-A/JP, because the punch pin is inserted into the mold cavity after the molten resin is filled in the mold cavity, the resistance from the molten resin is large. Therefore, a large drive power is required to insert the punch pin as a result the mechanism enlarges, and the cost rises.

The H5-104582-A/JP teaches to control an amount of a molten resin being injected to a mold cavity so that the capacity corresponding to an amount of a molten resin being thrust aside by the punch pin may remain in the mold cavity. And, it is explained that a shelter room in which a surplus resin is accommodated may not be equipped when controlling like that. However, in the injection molding, it is extremely difficult to strictly control an amount of injecting resin.

The object of the present invention is to mold a product having a through hole at low cost without causing a weld by using a comparatively small mechanism.

This object can be achieved by the following technologies of from [2-1] to [2-4]. In the following, polymers such as elastomers and synthetic rubbers etc. can be used in place of the resin.

### [2-1]

A mold for injection molding comprising:
a mold cavity having an inside shape fitted to an outside shape of a target product;
(a junk cavity being communicated with the mold cavity;) and
a temporary space being communicated with the mold cavity and is eliminated before an amount of a molten material being injected to the mold cavity reaches the (total) capacity of the mold cavity (and the junk cavity);
wherein said temporary space is the space being situated in the mold cavity space and delimited from the mold cavity space by a virtual boundary and eliminated at a predetermined time by an eliminator; said eliminator is a movable pin having the outside shape fit to the inside shape of the through hole to be formed in an target product and is started to be inserted to the mold cavity to occupy the temporary space when the melt front of a molten material passed the position of the temporary space.

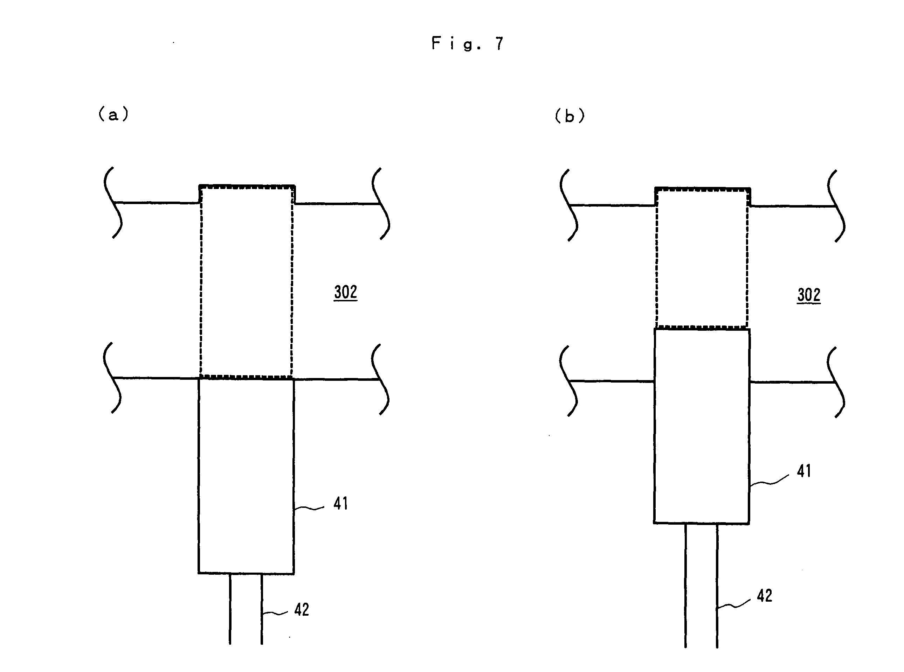

The head of said movable pin can be in a jut state against to the mold cavity space 302 before operation as shown in Fig. 7(b). Also, the head of said movable pin may be in a not jut state against to the mold cavity space 302 before operation as shown in Fig. 7(a). If the head of said movable pin is in a jut state against to the mold cavity space, said temporary space is the area shown by a broken line in Fig. 7(b). The volume of this area is equal to the value in which the volume of said jut part is subtracted from the volume of said through hole. If the head of said movable pin is in a jut state against to the mold cavity space, the movable pin can be utilized as a pressure detection element that can detect the pressure of the molten resin sensitively. If the head of said movable pin is in a not jut state against to the mold cavity space, said temporary space is the area shown by a broken line in Fig. 7(a).

Said movable pin can be inserted to the mold cavity at arbitrary time of the period from when the melt front of the molten resin has passed the temporary space to when the total amount of the molten resin injected to the mold cavity reaches the amount calculated by subtracting the volume of the temporary space from the capacity of the mold cavity. The time immediately after the melt front of the molten resin has passed the temporary space is preferable. In other words, resistance from the molten resin is the smallest at that time. Therefore the power required to drive the movable pin can be lowered and the machine for injection molding can get smaller in size.

The following techniques from (i) to (v) etc, each of which can detect the time when the melt front of the molten resin passes the position of the movable pin, can be used.

### (i) Detection of pressure

A technique to use the time when a predetermined time is expired from when the detected value reached a designated pressure as the passage time of the melt front

The detection point of said pressure is situated at the upstream side of the movable pin. Said designated pressure is equal to the pressure that corresponds to the attainment of a molten resin to the movable pin. Said predetermined time can be obtained by the distance between the pressure detection point and the movable pin and by the velocity of the molten resin.

### (ii) Elapsed time

A technique to use the time when a predetermined time is expired from when the injection of a molten resin from the gate started as the passage time of the melt front

Said predetermined time can be obtained by the distance between the gate position and the movable pin and by the velocity of the molten resin.

### (iii) Screw position of the injection molding machine

A technique to use the time when a predetermined time is expired from when the screw position of the injection molding machine became a designated position as the passage time of the melt front

Said designated position is a position that the melt-front of the molten resin pushed out by the screw to the mold cavity via the gate passes the position of the movable pin.

### (iv) Detection of temperature

A technique to use the time when a predetermined time is expired from when the detected temperature reached a designated temperature as the passage time of the melt front

The detection point of said temperature is situated at the upstream side of the movable pin. Said designated temperature is equal to the temperature that corresponds to the attainment of a molten resin. Said predetermined time can be obtained by both the distance and the thermal conductivity between the temperature detection point and the movable pin.

### (v) Others

A technique, for example, to use the time when a predetermined time is expired from when the melt front is detected by the photo sensor situated at a predetermined position as the passage time of the melt front

The detection point of said melt front is situated at the upstream side of the movable pin. Said predetermined time can be obtained by the distance between the melt front detection point and the movable pin and by the velocity of the molten resin.

### [2-2]

A mold for injection molding according to said [2-1]
wherein said movable pin is driven by an oil hydraulic mechanism being controlled by the pressure of the molten resin of the upstream side of the movable pin.

For the oil hydraulic mechanism being controlled by the pressure of the molten resin of the upstream side of the movable pin, for example, the following mechanisms of (i) and

### (ii) are available.

### (i) Fig. 8

An oil hydraulic mechanism transferring the pressure of the oil hydraulic circuit 432a to the oil hydraulic circuit 434a according to a detection of a pressure of a molten resin at a predetermined portion of the upstream side of the movable pin

Said oil hydraulic circuit 432a is applied pressure in synchronization with an operation of an injection molding machine. Said oil hydraulic circuit 434a is used for the oil hydraulic device 421a that drives the movable pin.

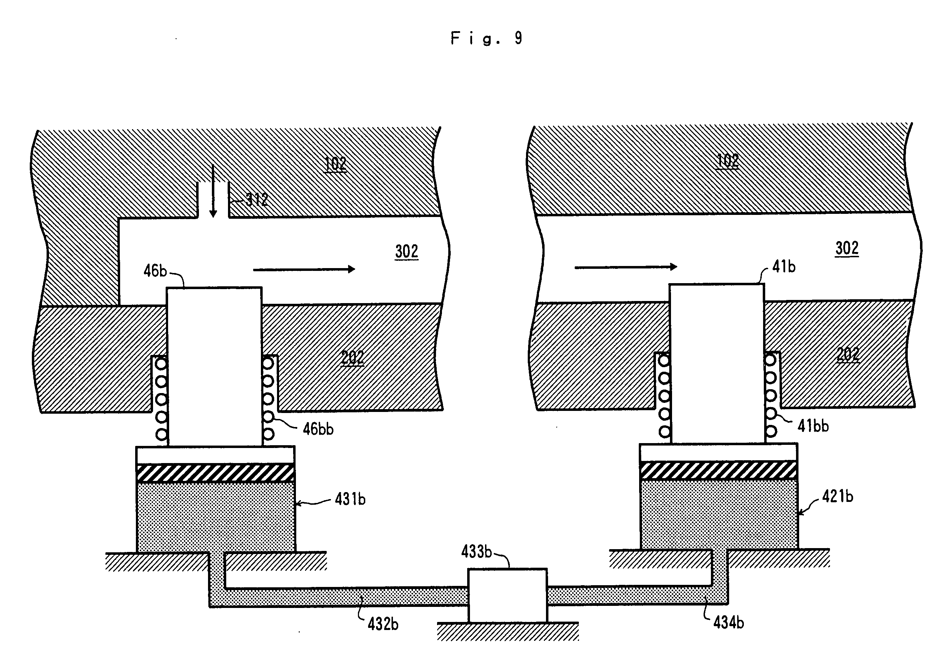

### (ii) Fig.9

An oil hydraulic mechanism in which a pressure of a molten resin at a predetermined portion of the upstream side of the movable pin is applied to the oil hydraulic circuit 432b and thereby the pressure control valve 433b is opened when the applied pressure reaches the designated value so as to transfer the pressure of the oil hydraulic circuit 432b to the oil hydraulic circuit 434b for driving the movable pin

The above mentioned predetermined portion is, for example, a portion opposite to the gate.

### [2-3]

A method of injection molding by using a mold wherein a mold cavity having an inside shape fitted to an outside shape of a target product, (a junk cavity being communicated with the mold cavity,) and a temporary space being communicated with the mold cavity and is eliminated before an amount of a molten material being injected to the mold cavity reaches the (total) capacity of the mold cavity (and the junk cavity) are included, and wherein said temporary space is the space being situated in the mold cavity space and delimited from the mold cavity space by a virtual boundary and eliminated at a predetermined time by an eliminator, said eliminator is a movable pin having the outside shape fit to the inside shape of the through hole to be formed in an target product, said method comprising the steps of:
opening a gate to inject a molten material into said mold cavity;
starting the insert of said movable pin to the mold cavity to occupy the temporary space when the melt front of a molten material passed the position of the temporary space.

### [2-4]

A method of injection molding according to said [2-3]
wherein said movable pin is driven by an oil hydraulic mechanism being controlled by the pressure of the molten resin of the upstream side of the movable pin.

### MOLDING MATERIAL

Same materials as described in said [1] are available for the molding material.

### [3] AN INJECTION MOLDING WHERE A BRANCH AND A CONFLUENCE OF A MOLTEN RESIN IS INEVITABLY CAUSED

In an afore-mentioned technology (d), a product without a weld can be molded. However, the (d) is a technology that prevents a confluence of a molten resin at the downstream side of a through hole of comparatively small diameter. Therefore, the resistance that the punch pin receives from a molten resin becomes large when the diameter of the through hole of a target product is comparatively large, and the enlargement of the injection molding machine and the rise of the cost are caused.

In an afore-mentioned technology (e), a product without a weld can be molded. However, the (e) is a technology that causes a confluence of a molten resin in a rib space situated at the behind of a through hole. And then, the rib is cut off from the molded product when the product is taken out from the mold cavity. Therefore, the resin of the rib is uselessly consumed. Also, because the process of cutting the rib is required, the enlargement of the injection molding machine and the rise of the cost are caused.

The object of the present invention is to mold a product having a special shape that inevitably causes a branch and a confluence of a molten resin without causing a weld, without uselessly consuming the resin, at low cost, and by using a comparatively small mechanism.

This object can be achieved by the following technologies of from [3-1] to [3-5]. In the following, polymers such as elastomers and synthetic rubbers etc. can be used in place of the resin.

### [3-1]

A mold for injection molding comprising:
a mold cavity having an inside shape fitted to an outside shape of a target product;
(a junk cavity being communicated with the mold cavity;) and
a temporary space being communicated with the mold cavity and is eliminated before an amount of a molten material being injected to the mold cavity reaches the (total) capacity of the mold cavity (and the junk cavity);
wherein said mold cavity has a body being corresponding to a through hole of a target product and jut into the mold cavity space to cause a branch and a confluence of the molten material; said temporary space is the space being set at the confluence side of the body to act flow leader and eliminated at a predetermined time by an eliminator; said eliminator is started to eliminate the temporary space to push and return a molten material accumulated in the temporary space to the mold cavity.

The molten resin being joined on back side of said body after diverged on front side of the body is accumulated in said temporary space. This temporary space is comparatively deep and the capacity is comparatively large as a result the temperature decrease of the accumulated molten resin is comparatively gradual.

Therefore, the flow velocity of the molten resin in the temporary space becomes higher than that of the mold cavity. And the temporary space is able to function as a flow leader.

For the example of the product inevitably causing a branch and a confluence, a product such as a picture frame comprising a frame body and a large center hole enclosed by the frame body can be named. In other words, the hole can be large. It is indispensable to set said temporary space in said body corresponding to a hole of a target product. However, the hole of the target product can be small in size. The number of holes of a target product can be one or more. Similarly, the shape of the hole can be assumed various shapes such as a square, a polygon, and round shape, etc.

Said eliminator is started at arbitrary time of the period from when the molten resin has filled in the temporary space to when the molten resin fills the mold cavity. Preferably, in the period from when the molten resin has filled in the temporary space to when the total amount of the molten resin injected to the mold cavity reaches the amount calculated by subtracting the volume of the temporary space from the capacity of the mold cavity. More preferably, immediately after the molten resin has filled in the temporary space. In the time before the molten resin fills the mold cavity, said eliminator can easily eliminate the temporary space to push and return a molten material accumulated in the temporary space to the mold cavity because the resistance from the molten resin in the mold cavity is comparatively small. In the time before the total amount of the molten resin injected to the mold cavity reaches the amount calculated by subtracting the volume of the temporary space from the capacity of the mold cavity, said eliminator can eliminate the temporary space more easily to push and return a molten material accumulated in the temporary space to the mold cavity because the resistance from the molten resin in the mold cavity is comparatively smaller. In the time immediately after the molten resin has filled in the temporary space, said eliminator can eliminate the temporary space most easily to push and return a molten material accumulated in the temporary space to the mold cavity because the resistance from the molten resin in the mold cavity is comparatively smallest.

Said eliminator can be started at the time which is determined by one of the following techniques of (i) to (v).

### (i) Detection of pressure

A technique to use the time when the detected value at a predetermined portion reaches a designated pressure as the reference time

Said designated pressure is equal to the pressure that corresponds to the attainment of a molten resin to a predetermined portion.

### (ii) Elapsed time

A technique to use the time when a predetermined time is expired from when the injection from the gate started as the eliminator start time

### (iii) Screw position of the injection molding machine

A technique to use the time when a predetermined time is expired from when the screw position of the injection molding machine became a designated position as the eliminator starting time

### (iv) Detection of temperature

A technique to use the time when the detected value at a predetermined portion reaches a designated temperature as the reference time

Said designated temperature is equal to the temperature that corresponds to the attainment of a molten resin to a predetermined portion.

### (v) Others

A technique, for example, to use the time when the melt front is detected by the photo sensor situated at a predetermined position as the reference time

### [3-2]

A mold for injection molding according to said [3-1]
wherein said eliminator is driven by an oil hydraulic mechanism being controlled by the pressure of the molten resin of a predetermined portion in the mold cavity.

Said eliminator can eliminate the temporary space easily to push and return a molten resin accumulated in the temporary space to the mold cavity because the resistance from the molten resin in the mold cavity is comparatively small. Therefore, said oil hydraulic mechanism can be utilized though its drive power is comparatively small.

For the oil hydraulic mechanism being controlled by the pressure of the molten resin of the predetermined portion in the mold cavity, for example, the following mechanisms of (i) and (ii)are available.

### (i) Fig. 13

An oil hydraulic mechanism transferring the pressure of the oil hydraulic circuit 432a to the oil hydraulic circuit 434a according to a detection of a pressure of a molten resin at a predetermined portion of the upstream side of the movable pin

Said oil hydraulic circuit 432a is applied pressure in synchronization with an operation of an injection molding machine. Said oil hydraulic circuit 434a is used for the oil hydraulic device 421a that drives the movable pin.

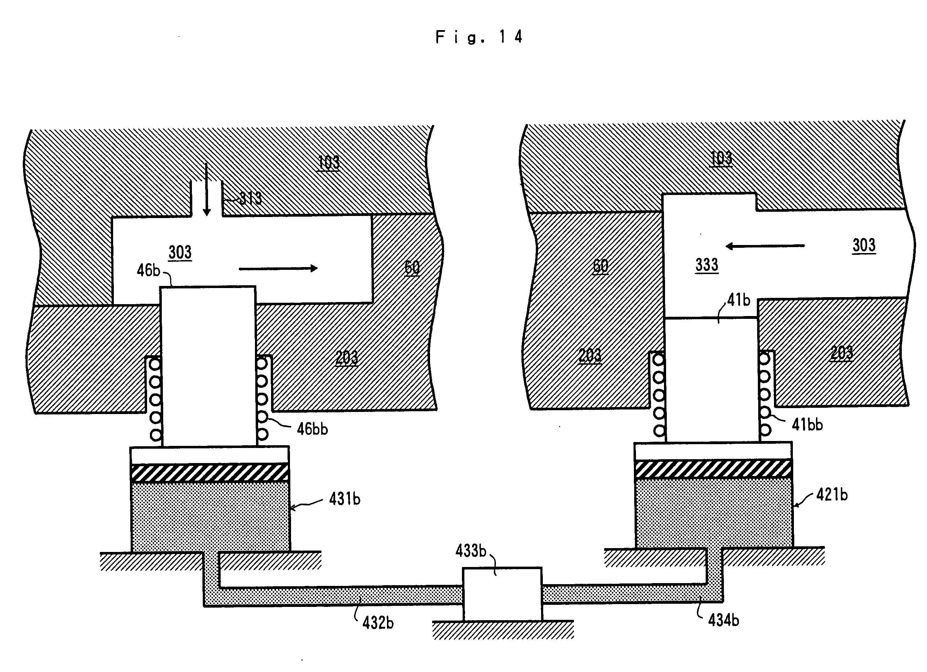

### (ii) Fig.14

An oil hydraulic mechanism in which a pressure of a a predetermined portion of the mold cavity is applied to the oil hydraulic circuit 432b and thereby the pressure control valve 433b is opened when the applied pressure reaches the designated value so as to transfer the pressure of the oil hydraulic circuit 432b to the oil hydraulic circuit 434b for driving the movable pin

The above mentioned predetermined portion is, for example, a portion opposite to the gate.

### [3-3]

A method of injection molding by using a mold wherein a mold cavity having an inside shape fitted to an outside shape of a target product, (a junk cavity being communicated with the mold cavity,) and a temporary space being communicated with the mold cavity and is eliminated before an amount of a molten material being injected to the mold cavity reaches the (total) capacity of the mold cavity (and the junk cavity) and wherein said mold cavity has a body being corresponding to a through hole of a target product and jut into the mold cavity space to cause a branch and a confluence of the molten material, said temporary space is the space being set at the confluence side of the body to act flow leader and eliminated at a predetermined time by an eliminator, said method comprising the steps of:
opening a gate to inject a molten material into said mold cavity;
starting said eliminator to eliminate the temporary space to push and return a molten material accumulated in the temporary space to the mold cavity.

### [3-4]

A method of injection molding according to said [3-3]
wherein said eliminator is driven by an oil hydraulic mechanism being controlled by the pressure of the molten resin of the predetermined portion in the mold cavity.

### MOLDING MATERIAL

Same materials as described in said [1] are available for the molding material.

### BRIEF DESCRIPTION OF DRAWINGS

Fig. 1 schematically shows before time t2 that starts to inject the resin from gate 112 of the cavity of the injection mold of the first embodiment. Fig. 1(a) is an upper chart where Fig. 1(b) was seen like arrow A and Fig. 1(b) is a cross sectional chart where Fig. 1(a) was seen like arrow B.
Fig. 2 schematically shows after time t2 that starts to inject the resin from gate 112 of the cavity of the injection mold of the first embodiment. Fig. 2(a) is an upper chart where Fig. 2(b) was seen like arrow A and Fig. 2(b) is a cross sectional chart where Fig. 2(a) was seen like arrow B.
Fig. 3 is a descriptive view of Fig. 1(a) and Fig. 2(a) illustrating the traveling of the melt front of the molten resin.
Fig. 4 is a descriptive view in cross sectional charts of Fig. 1 and Fig. 2 illustrating the traveling of the melt front of the molten resin.
Fig. 5 (a) is an upper chart schematically showing the main part (the vicinity of the cavity 302) of the injection mold of the second embodiment and Fig. 5(b) is a cross sectional chart where Fig. 5(a) was seen like arrow B.
Fig. 6 is a descriptive view illustrating the travel of the movable pin 41 in Fig. 5 (b) . Fig. 6(a) shows the movable pin 41 of the state before insert and Fig. 6(b) of the state after insert.
Fig. 7 is a descriptive view showing the position of the movable pin 41 before operation. Fig. 7(a) shows that the movable pin 41 is not in jut state and Fig. 7(b) shows that the movable pin 41 is in jut state.
Fig. 8 is a descriptive view showing an example of the driving mechanism that drives the movable pin 41 shown in Fig. 5(b).
Fig. 9 is a descriptive view showing another example of the driving mechanism that drives the movable pin 41 shown in Fig. 5(b).
Fig. 10 shows the main part (the vicinity of the cavity) of the injection mold of the third embodiment. Fig. 10(a) is a schematic upper chart where a part of the cavity was shown while seen through and Fig. 10(b) is an end face chart where Fig. 10 (a) is seen like arrow B. The state that the melt front has not reached to the pressure sensor 45 is shown.
Fig. 11 shows the main part (the vicinity of the cavity) of the injection mold of the third embodiment. Fig. 11(a) is a schematic upper chart where a part of the cavity is shown while seen through and Fig. 11 (b) is an end face chart where Fig. 11(a) is seen like arrow B. The state that the melt front reaches to the pressure sensor 45 is shown.
Fig. 12 shows the example of the shape of the resin accumulation room 333 in a state that the melt front does not reach to the pressure sensor 45 (refer to Fig. 10). Fig. 12 (a) shows an example of the resin accumulation room 333a that is deep in the thickness direction of the product and Fig. 12(b) shows an example of the resin accumulation room 333b that is extended in the board direction of the product.
Fig. 13 is a descriptive view showing an example of the driving mechanism that drives the movable pin 41 shown in Fig. 10 and Fig. 11.
Fig. 14 is a descriptive view showing another example of the driving mechanism that drives the movable pin 41 shown in Fig. 10 and Fig. 11.

### PREFERRED EMBODIMENT

### [1] FIRST EMBODIMENT (A mold for injection molding having two or more gates)

The injection molding technology of the first embodiment will be described referring to the drawings.

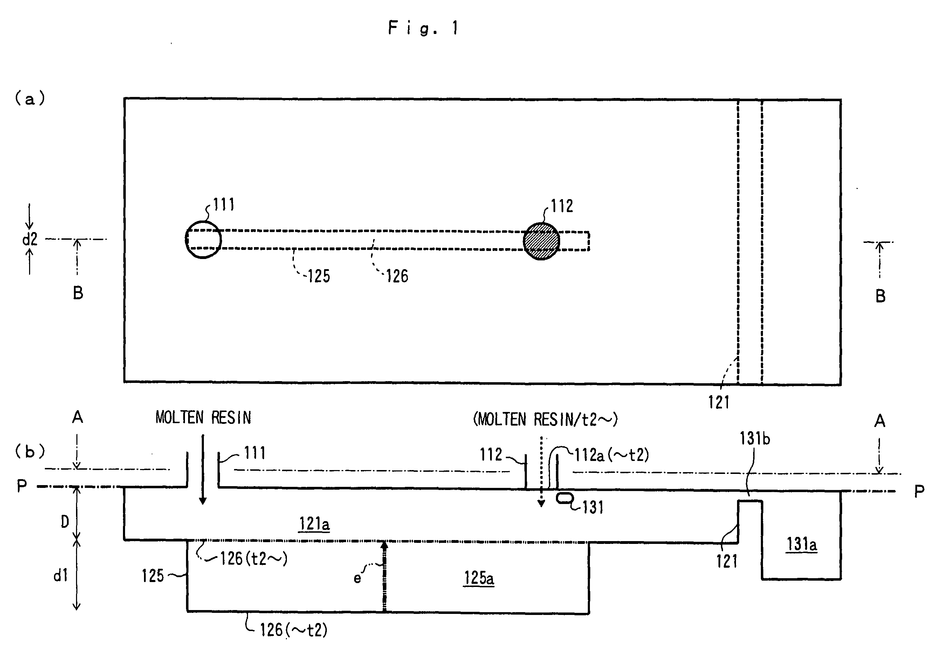

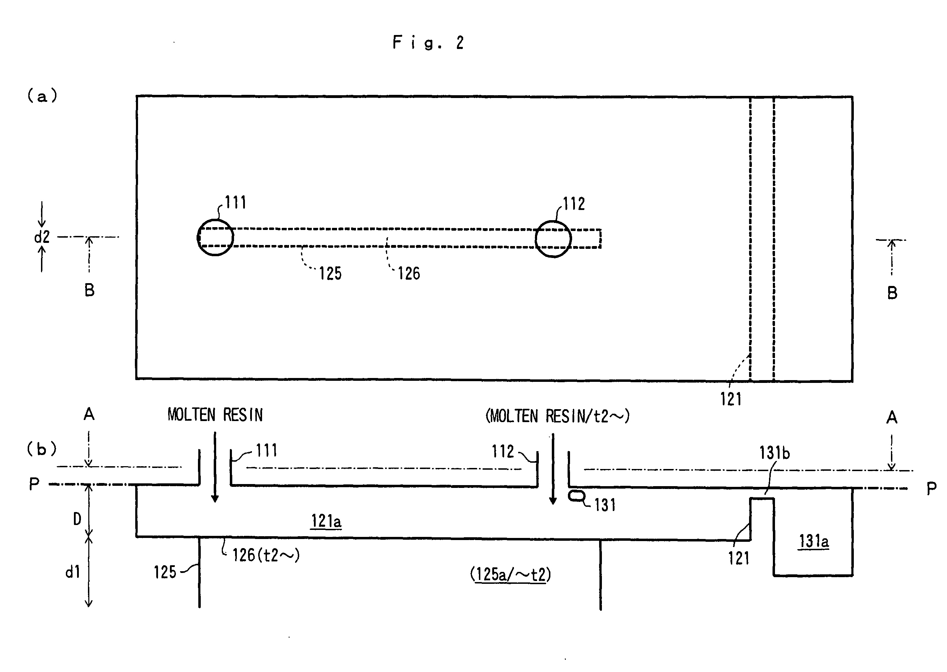

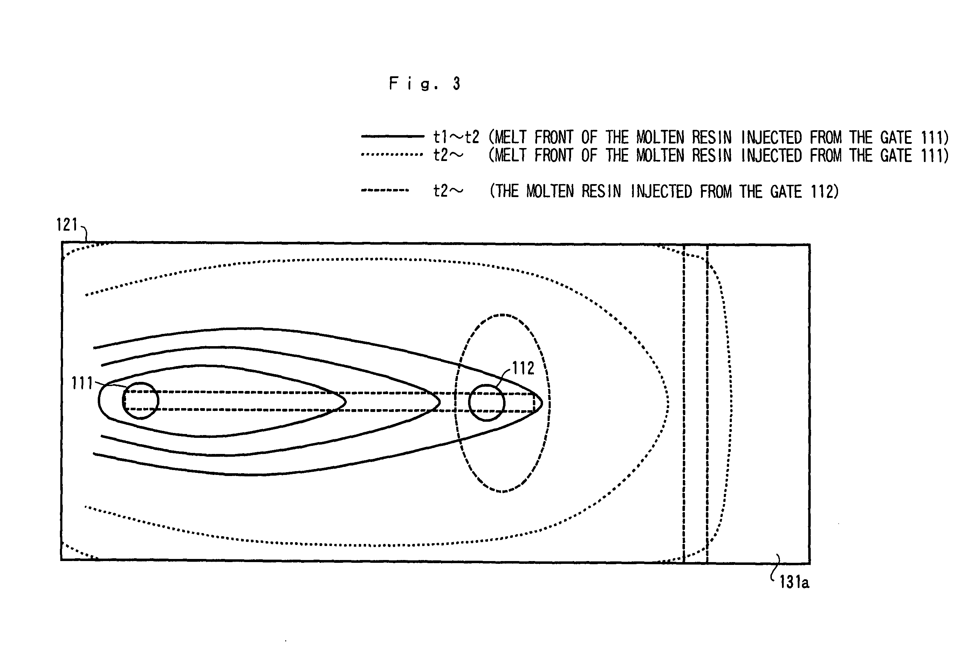

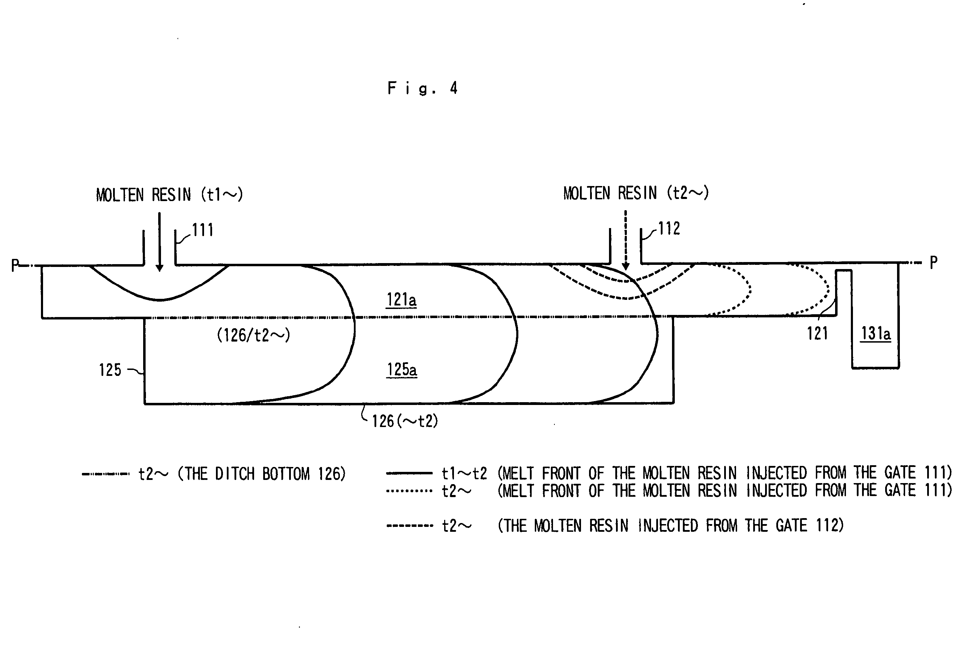

Fig.1 and Fig.2 shows the cavity of the injection mold of the first embodiment. Fig.1 shows the state before the time t2 that starts to inject the resin from gate 112 and Fig.2 shows the state after the time t2. Also, each figure (a) is an upper chart where corresponding figure (b) was seen like arrow A. Each figure (b) is a cross sectional chart where corresponding figure (a) was seen like arrow B. Fig.3 and Fig.4 are descriptive views in upper charts or cross sectional charts of Fig. 1 and Fig. 2 illustrating the traveling of the melt front of the molten resin.

In the following descriptions, "upper/above" or "under/below" are based on Fig. 1(b), Fig. 2(b), and Fig. 4.

The mold cavity 121a of the injection mold shown in the figures is composed of the movable molding die (or the fixed molding die) located above the division line P and the fixed molding die (or the movable molding die) located below the division line P. Note that the well-known mechanisms can be utilized as the mechanisms such as the mechanism that opens/closes the mold cavity by moving the movable molding die, the mechanism that takes out the product by pushing it using the pin etc, and the mechanism that sends the molten resin to the gate. The descriptions of these are omitted.

In the example shown in the figures, a mold cavity 121a being composed of a cavity wall 121 etc., has a hexahedron shape of thin board, and is used to mold hexahedron shape of thin board. However, this shape is one example, and the shape of the target product is not restricted in this invention. When a product of thin board with a big flow resistance to molten resin in a mold cavity is molded, the part of effects of the injection mold of the first embodiment becomes more remarkable. The part of effects of the injection mold of the first embodiment are that the molten resin can be flowed along within the ditch space 125a at high speed and that the molten resin pushed out to the mold cavity 121a by the elimination of the ditch space 125a can be diffused at high speed. Ditch space 125a and its elimination are described later.

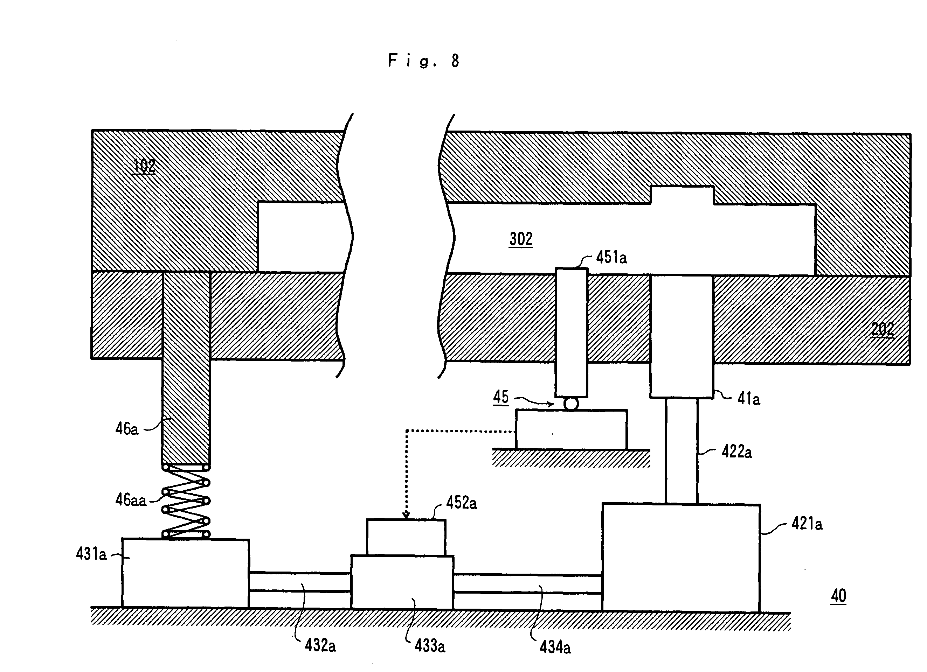

The ditch space 125a composed of the ditch wall 125 and the ditch bottom 126 is equipped under the mold cavity 121a. The ditch space 125a functions as a flow leader. That is, the molten resin injected from the gate 111 flows along the ditch space 125a at high speed in the direction of the gate 112. The ditch bottom 126 can be moved as shown by arrow e of a fat two point chain line. The position of ditch bottom 126 becomes the position of two point chain line shown in Fig. 1(b) by this movement. And as a result the ditch space 125a is eliminated naturally. The molten resin that had been filled within the ditch space 125a before this movement is pushed and returned to the mold cavity 121a. Thereby, the molten resin in the mold cavity 121a is rapidly spread in the direction of the board (direction of thin board). Note that a well-known mechanism and driving source for moving a wall can be adopted as the mechanism and driving source to move the ditch bottom 126 as shown by arrow e with fat two point chain line, and to move it in the opposite direction to return to the former position. Also, the mechanism shown in Fig. 8 and Fig. 9 for instance can be used. Fig. 8 and Fig. 9 are described later. The resin is still remaining a molten state when the ditch bottom 126 is moved. Therefore, the ditch bottom 126 can be moved by very low power. In other words, the mechanism that moves the ditch bottom 126 by using a pressure of the air or a pressure of the molten resin etc. for instance can be adopted.

When the average thickness of the mold cavity 121a is D, and, when the average depth of the ditch space 125a or the height of the ditch wall 125 is d1, and, when the average width of the ditch space 125a is d2, respectively, as shown in Fig. 1, the d1 preferably should be in a range from 0.01D to 10D, and more preferably should be in a range from 0.5D to 3D. Also, the d2 preferably should be more than 0.5d1, and more preferably should be equal to d1 or should be more than d1.

The openings of the gate 111 and 112 to inject a molten resin to the mold cavity 121a are situated at the inside wall of the mold cavity 121a. Two gates are shown in the figure. The number of gates can be two or more in this invention. In other words, the number of gates can be increased or decreased properly under the restriction that should be two or more in proportion to the shape and/or the size etc. of the target product.

The gate 111 is the first-order gate and the gate 112 is the second-order gate when the gate 111 is the first-order gate. In other words, the first-order gate and the second-order gate are terms that show the relative relations between the two gates. The first-order gate and the second-order gate can be properly set according to the size and/or the shape etc. of the target product. For instance, another gate can be set as a second-order gate in the relation of the gate 112 that is the second-order gate in the relation of the gate 111. Also, another gate can be set as a second-order gate in the relation of the gate 111 that is the first-order gate in the relation of the gate 112. The direction from the gate 111 of said another gate is different from that of the gate 112.

The gate 112 being the second-order gate is equipped with the shutter 112a to prevent a molten resin from injecting until the injection starting time. The gate 111 being the first-order gate also can be equipped with the shutter to prevent a molten resin from injecting until the injection starting time.

The vicinity of the opening of the gate 112 being the second-order gate is equipped with the pressure sensor 131 to detect the melt front of the molten resin injected from the gate 111. A well-known sensing device can be adopted as the pressure sensor 131. Also, an accurate position where the pressure sensor 131 is installed can be decided by a well-known technique. Therefore, the explanation of these is omitted.

The junk cavity 131a is communicated with the mold cavity 121a via narrow path 131b being opened at the inside wall of the mold cavity 121a far from the gates 111 and 112. The surplus resin overflow from the mold cavity 121a is accommodated in the junk cavity 131a. In this first embodiment, the resin pushed out from the ditch space 125a when the ditch space 125a is eliminated is accommodated in the junk cavity 131a.

Next, the action is described.

The injection of the molten resin from the gate 111 is started at the time t1 (Refer to the solid line arrow in Fig. 1). At this time t1, the shutter 112a of the gate 112 is still closed so that the injection is not started. This state is shown by the arrow of the broken line. And the ditch bottom 121 is at the position shown by the solid line. That is, the ditch space 125a exists under the mold cavity 121a.

The melt front of the molten resin injected from the gate 111 flows as the solid line shown in Fig. 3 and 4. That is, in the direction along the ditch space 125a (the direction toward the gate 112), the molten resin flows at high speed. However, in the direction without the ditch space 125a, the molten resin flows comparatively slowly.

The shutter 112a of the gate 112 is opened as shown in Fig. 2 to start an injection of a molten resin from the gate 112 when the pressure sensor 131 detects a molten resin. This time is indicated as t2 in this specification. At the same time, the ditch bottom 126 is moved as shown by arrow e with fat two point chain line (Refer to Figure 1(b)), and then located at the solid line position (Refer to Figure 2(b)). The ditch space 125a is eliminated, and as a result, the molten resin injected from the gate 111 and filled in the ditch space 125a until then is pushed to the mold cavity 121a to be returned. The molten resin in the mold cavity 121a is pushed rapidly in the direction of the board side of the thin board product and spread because of the pressure at this time. Because the molten resin is rapidly filled in the mold cavity 121a as described above, and because the opening and shutting time of the gate 111 doesn't depend on the opening and shutting time of the gate 112, the molten resin injected from the gate 111 is filled enough in the mold cavity 121a. Therefore, the defective molding by the defective filling is surely prevented. The time when the ditch space 125a is eliminated by the ditch bottom 126 being pushed up can be the same as the time when the injecting of the molten resin from the gate 112 is started. Also, the time when the ditch space 125a is eliminated by the ditch bottom 126 being pushed up can be later than the time when the injecting of the molten resin from the gate 112 is started.

The melt front of the molten resin injected from the gate 111 has passed over the position of the opening of the gate 112 when the injection of the molten resin from the gate 112 is started (refer to the dotted line in Fig. 3 and Fig. 4). Therefore, the melt front of the molten resin injected from the gate 112 doesn't meet the melt front of the molten resin injected from the gate 111. That is, the molten resin injected from the gate 112 is added to the behind of the melt front of the molten resin injected from the gate 111. Therefore, the weld line is not formed.

When the molten resin is filled in the mold cavity 121a, the injection of the molten resin is stopped. Thereby, cooling and the solidification process are begun. The molten resin overflow from the mold cavity 121a flows into the junk cavity 131a through passage 131b. The mold opening is done after the resin solidifies, the molded products are taken out, and the next forming cycle is begun.

In the above described first embodiment, the time when the molten resin injected from the gate 111 is detected by the pressure sensor 131 is set as the time t2, and the injection from the gate 112 and the rise of the ditch bottom 126 is started at the time t2. In place of this, the time when the injection from the gate 111 is started is set as the time t1 and the time when the predetermined time has elapsed since the time t1 can be set as the time t2. This predetermined time is different according to, for example, the inside shape and/or the volume of the mold cavity 121a and/or ditch space 125a, the distance between the openings of the gate 111 and 112, the viscosity of the molten resin, the pressure of the injection. The measured value of the required time that the melt front of the molten resin injected from the gate 111 reaches the position of the opening of the gate 112 can be set as the predetermined time.

Also, the time when the screw position of the injection molding machine becomes the designated position can be set as the time t2. This designated position is different according to, for example, the path that guide the molten resin from the injection molding machine to the gate 111, the inside shape and/or the volume of the mold cavity 121a and/or ditch space 125a, the distance between the openings of the gate 111 and 112. For example, the measured value of the screw position when the melt front of the molten resin injected from the gate 111 reaches the position of the opening of the gate 112 can be set as the designated position.

### [2] SECOND EMBODIMENT (A molded product having a hole such as a through hole)

The injection molding technology of the second embodiment will be described referring to the drawings.

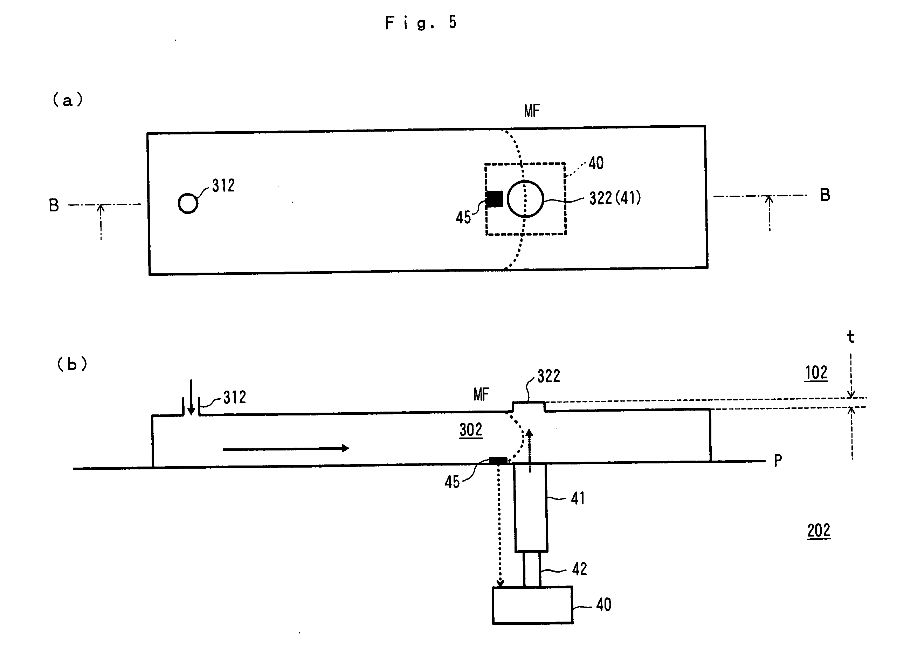

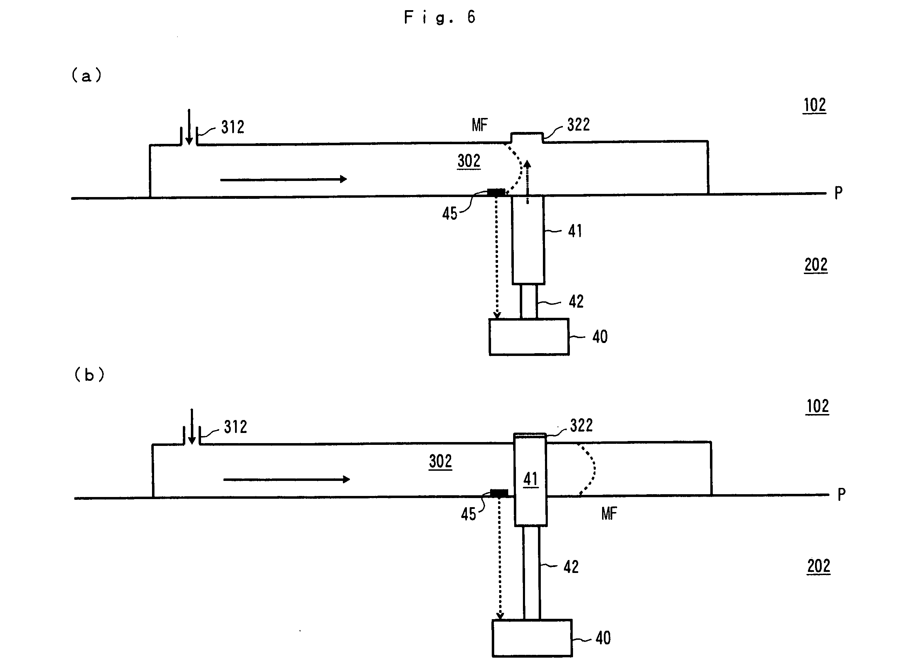

Fig. 5(a) is an upper chart schematically showing the main part (the vicinity of the cavity 302) of the injection molding of the second embodiment and Fig. 5(b) is a cross sectional chart where (a) was seen like arrow B. Fig. 6 is a descriptive view illustrating the travel of the movable pin 41 in Fig. 5 (b). Fig. 6(a) shows the movable pin 41 of the state before insert and Fig. 6(b) of the state after insert. Fig. 7 is a descriptive view showing the position of the movable pin 41 before operation. Fig. 7(a) shows an example that the movable pin 41 is not in jut state and Fig. 7(b) shows an example that the movable pin 41 is in jut state. Fig. 8 and 9 are descriptive views showing examples of the driving mechanism that drives the movable pin 41 shown in Fig. 5 (b).

As shown in Fig. 5, the mold cavity 302 is composed of the first molding die (an example: the movable molding die) 102 and the second molding die (an example: the fixed molding die) 202. This composition is one example. The movable molding die and the fixed molding die can be replaced or both of two molding dies can be movable dies. Also, the mold cavity can be composed of 3 or more molding dies. In this mold of the second embodiment, a junk cavity being communicated with the mold cavity 302 is equipped and functions same as the mold of the first embodiment. Showing the junk cavity is omitted.

In the mold cavity 302, the movable pin 41 having the outside shape thereof fit to the inside shape of the hole of the target product is equipped at the portion corresponding to the hole so that can advance to the mold cavity 302. In other words, the movable pin 41 is set so that can be projected as shown in Figure 5(b) by the arrow of two point chain line. In the structure example of Fig. 5(b), in the initial stage, the head of the movable pin 41 is not projected to the mold cavity 302. However, in place of that structure, in the initial stage, the head of the movable pin 41 can be in a jut state to the mold cavity 302 as shown in Fig. 7 (b) . If the head of the movable pin 41 is projected in the initial stage to the mold cavity 302, the movable pin 41 can be also utilized as a high sensitive pressure detection device such as the device 451a in Fig. 8 which detects a pressure of the molten resin.

A concave hole 322 that accepts the head of the movable pin 41 is shaped on the inside surface of the mold cavity 302 opposite to the head of the movable pin 41 as shown in Fig. 5. The inside shape of this hole 322 just fits to the outside shape of the head of the movable pin 41, therefore, if the resin is remain in the bottom of the hole 322, the remaining resin is cut off when the product is taken out.

The operation of the movable pin 41 is described referring to Fig. 6.

The molten resin injected from the gate 312 is advanced in the mold cavity 302 (refer to the arrows). The pressure sensor 45 outputs the signal to the oil hydraulic mechanism 40 when the melt front MF of the molten resin reaches the position of the pressure sensor 45 as shown in Fig. 6(a). Thereby, the oil hydraulic mechanism 40 is started and the movable pin 41 is projected to the mold cavity 302 as shown in Fig. 6(b). In this embodiment, the movable pin 41 thrusts immediately to the mold cavity 302 when the melt front MF of the molten resin passes the position of the movable pin 41, therefore, the melt front MF does not branch and so the confluence of the melt front MF does not be caused. As a result, the weld is prevented from being caused. Also, the movable pin 41 thrusts immediately to the mold cavity 302 when the melt front MF of the molten resin passes the position of the movable pin 41, therefore, the resistance from the molten resin is small enough and so the required power to drive the movable pin 41 can be lowered enough. As a result, the mechanism that drives the movable pin 41 by utilizing the pressure of the molten resin can be used.

Also, the afore mentioned embodiment, the movable pin 41 thrusts immediately to the mold cavity 302 when the melt front MF of the molten resin passes the position of the movable pin 41, however, the movable pin 41 can be projected to the mold cavity 302 at arbitrary time of the period from when the melt front of the molten resin passes the movable pin 41 to when the total amount of the molten resin injected to the mold cavity 302 reaches the amount calculated by subtracting the volume of the space being occupied by the projected movable pin 41 (refer to the areas enclosed in broken line in Fig. 7) from the capacity of the mold cavity 302. The resistance to the movable pin 41 from the molten resin when inserting is smaller if the insertion is started more immediate when the melt front passes the position of the movable pin 41. Therefore, the required power for driving the movable pin 41 can be lowered.

Referring to Fig. 8, an example of the mechanism to insert the movable pin 41 or to back off the same will be described. The word "down" or "up" are defined referring to Fig. 8.

Fig. 8 shows the oil hydraulic mechanism that transfers the pressure of the oil hydraulic circuit 432a to the oil hydraulic circuit 434a according to the detection of the molten resin at the predetermined position of the upstream side of the movable pin 41a. Here, the pressure being synchronized with the closure operation of the injection mold is applied to the oil hydraulic circuit 432a. Also, the pressure of the oil hydraulic circuit 434a is used for the oil hydraulic device 421a that drives the movable pin 41.

The through pin 46a, the upper edge of which is contacted with the underside of the movable molding die 102, moves down in synchronization with the closure operation of the injection mold while opposing the resistance from the spring 46aa. Thereby, the spring/oil-pressure converter 431a is started to enhance the oil pressure of the oil hydraulic circuit 432a.

Next, the pressure sensor 45 outputs the signal to the valve control switch circuit 452a when the pressure detecting pin 451a situated at the predetermined position of upstream side of the movable pin 45 detects the melt front of the molten resin. Thereby, the valve control switch circuit 452a is closed to open the valve 433a, and the oil pressure being applied to the oil hydraulic circuit 432a is transferred to the oil hydraulic circuit 434a. As a result, the oil hydraulic device 421a is started to project the movable pin 41a through the cylinder shaft 422a.

Thus, the movable pin 41a is projected to the mold cavity 302.

Then, the opening process of the mold is started.

The pressure having been applied until then from the movable molding die 102 to the through pin 46a is eliminated when the movable molding die 102 goes up. And the through pin 46a goes up by the force applied from the spring 46aa to lower the pressure being applied to the oil hydraulic circuit 432a. Thereby, the pressure of the oil hydraulic circuit 432a is lowered to lower the pressure of the oil hydraulic circuit 434a being communicated with the oil hydraulic circuit 432a through the valve 433a. As a result, the oil hydraulic device 421a is started to pull down the movable pin 41 through the cylinder shaft 422a.

Thus, the movable pin 41a is pulled out from the mold cavity 302.

Referring to Fig. 9, another example of the mechanism to project the movable pin or to pull the same will be described. The word "down" and "up" are defined referring to Fig. 9.

Fig. 9 shows the oil hydraulic mechanism that opens the pressure control valve 433b to transfer the pressure of the oil hydraulic circuit 432b to the oil hydraulic circuit 434b when the pressure being applied to the oil hydraulic circuit 432b becomes the designated pressure. Here, the pressure of the molten resin at the predetermined position of the upstream side of the movable pin 41b, an example of which is the cavity surface that opposes to the gate 312 as shown in the figure, is applied to the oil hydraulic circuit 432b. Also, the oil hydraulic circuit 434b drives the movable pin 41b.

The pressure of the molten resin injected from the gate 312 is applied to the pressure transfer pin 46b. Thereby, the pressure transfer pin 46b applies the pressure to the oil hydraulic device 431b to enhance the pressure of the oil hydraulic circuit 432b being communicated with the oil hydraulic device 431b while opposing the resistance from the spring 46bb.

The pressure being applied to the pressure transfer pin 46b is promptly enhanced as time passes after the injection starting. Therefore, the pressure being applied from the pressure transfer pin 46b to the oil hydraulic device 431b is enhanced as time passes.

The pressure control valve is opened to transfer the pressure of the oil hydraulic circuit 432b to the oil hydraulic circuit 434b when the pressure of the oil hydraulic circuit 432b becomes the designated value. Thereby, the oil hydraulic device 421b is started to push up the movable pin 41b.

Thus, the movable pin 41b is inserted to the mold cavity 302.

The difference of the pressure between the position of the pressure transfer pin 46b and the position of the movable pin 41b becomes to zero when the resin injected to the mold cavity 302 is solidified. Therefore, the difference of the pressure between the oil hydraulic circuit 432b and the oil hydraulic circuit 434b becomes to zero and thereby the power to push up the movable pin 41b becomes to zero.

Then, the mold is opened, and the pressure transfer pin 46b and the movable pin 41b are returned to the respective former position by the force being applied from the respective spring 46bb and 41bb.

Thus, the movable pin 41b is pulled out from the mold cavity 302.

Each of the aforementioned oil hydraulic mechanism can be utilized for the mechanism, which is described in the "[1] First Embodiment", that drives to go up the ditch bottom 126 or to go down the same.

### [3] THIRD EMBODIMENT (An injection molding where a branch and a confluence of a molten resin is inevitably caused)

The injection molding technology of the third embodiment will be described referring to the drawings.

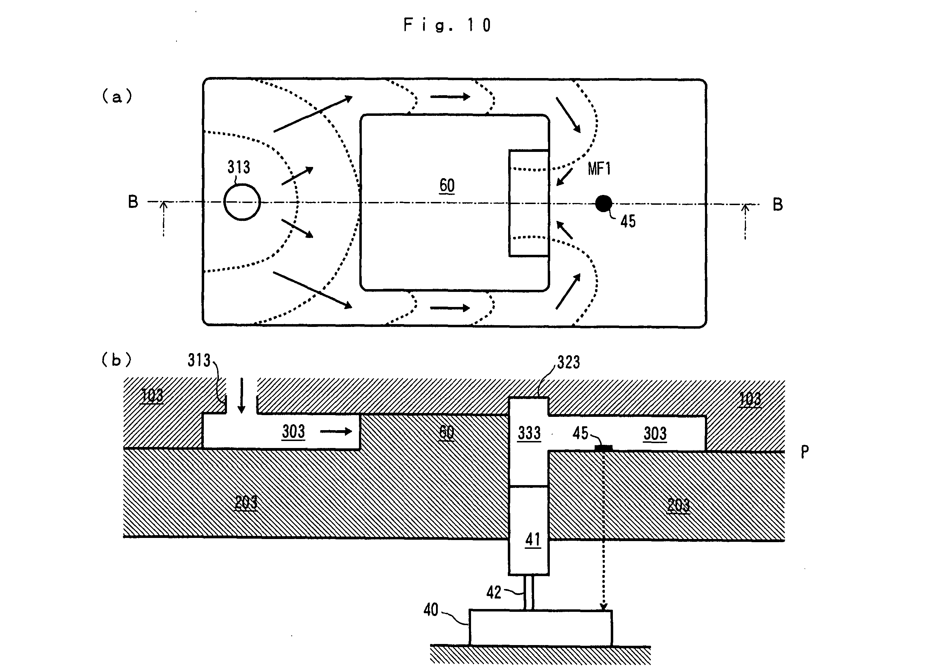

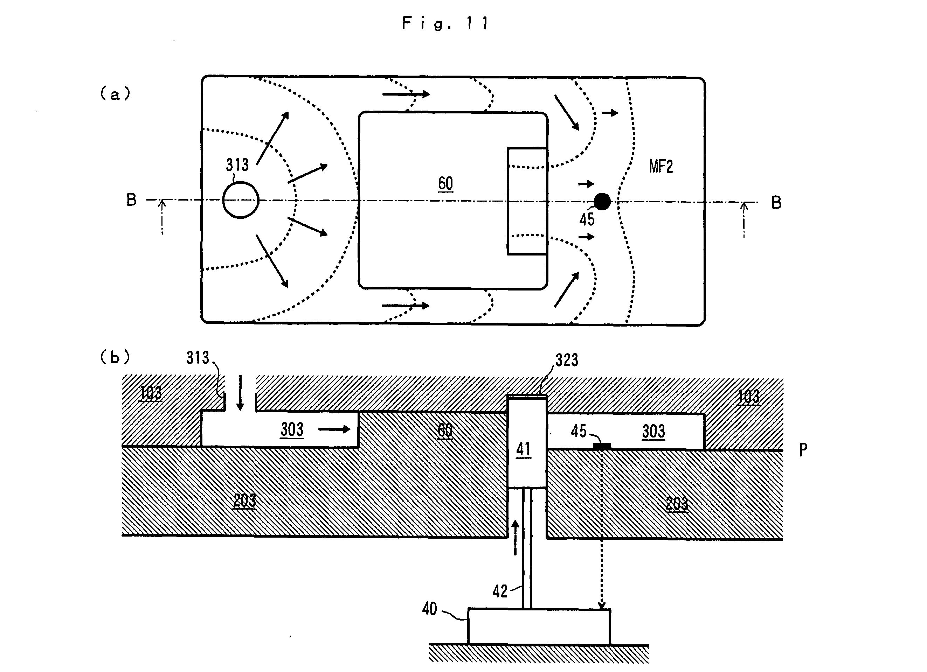

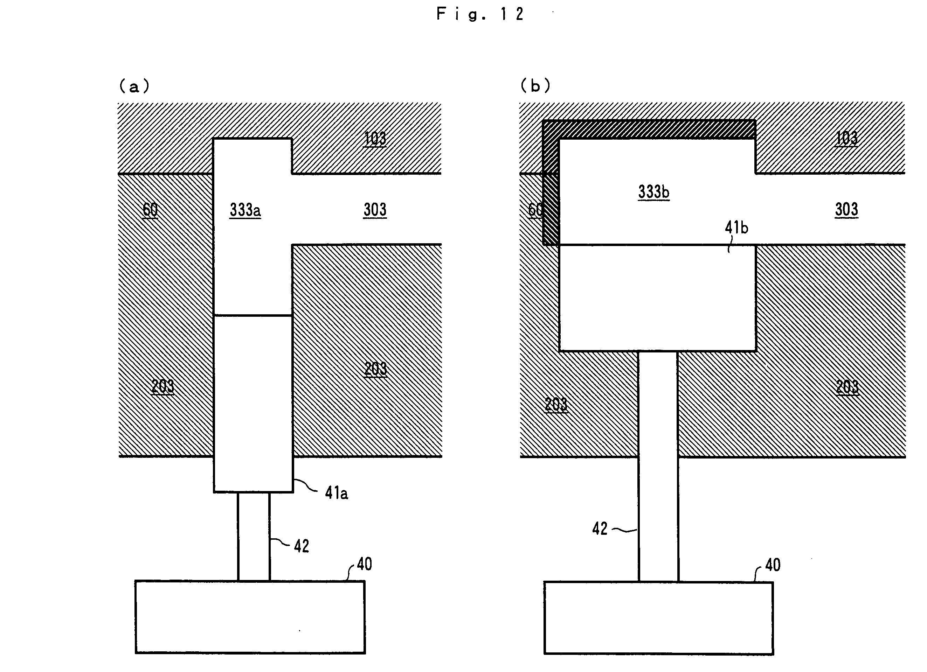

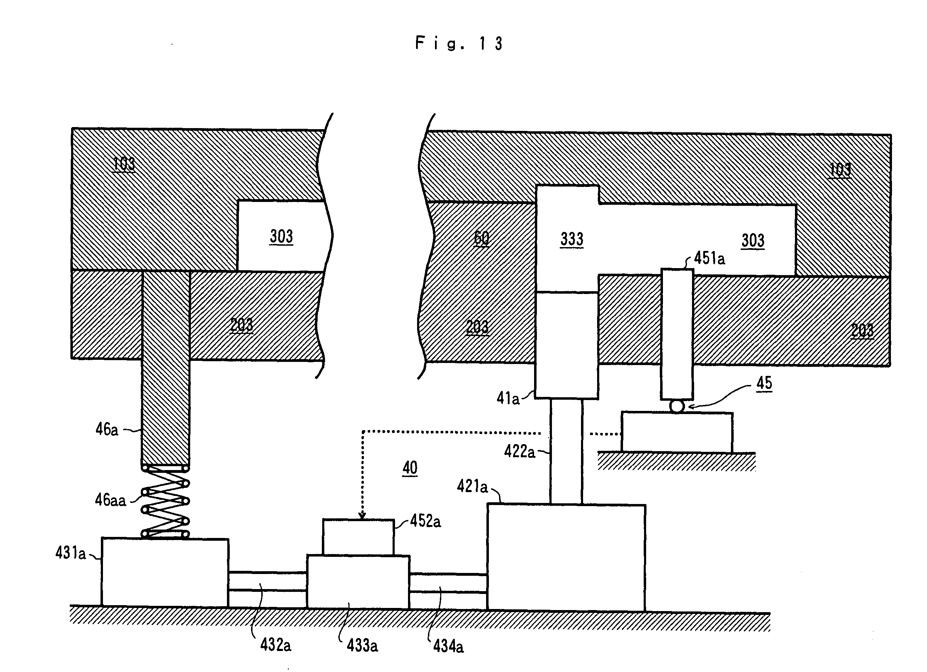

Fig. 10 and Fig. 11 show the main part of the injection mold of the third embodiment. Fig. 10 shows the state that the melt front has not been reached the pressure sensor 45 and Fig. 11 shows the state that the melt front reaches the pressure sensor 45. Also, each figure (a) is a schematic upper chart where a part of the cavity is shown while seen through and each figure (b) is an end face chart where respective figure (a) is seen like arrow B. Fig. 12 shows the example of the shape of the resin accumulation room 333 where the melt front has not reached the pressure sensor 45 (refer to Fig. 1). Fig. 12(a) shows an example that is deep in the thickness direction of the product and Fig. 12(b) shows an example that is extended in the board direction of the product. Figs. 13 and 14 are descriptive views showing the driving mechanism that drives the movable pin 41. The expressions of "upper" or "lower" in the following descriptions rely on the respective referred drawings.

As shown in Fig. 10 (or Fig. 11), the mold cavity 303 is composed of the first molding die (e.g. movable molding die) 103 and the second molding die (e.g. fixed molding die) 203. This composition is one example. The movable molding die and the fixed molding die can be replaced or both of two molding dies can be movable dies. Also, the mold cavity can be composed of 3 or more molding dies. In this mold of the third embodiment, a junk cavity being communicated with the mold cavity 303 is equipped and functions same as the mold of the first or the second embodiment. Showing the junk cavity is omitted.

In the mold cavity 303, a core 60 (a jut body 60) having the outside shape fit to the inside shape of the through hole of the target product is equipped at the portion corresponding to the through hole as if it obstructs the mold cavity space. In the example shown in the figure, the core 60 and the second molding die 203 are constructed in single piece however the core 60 can be constructed in single piece together with the first molding die 103.

Also, the resin accumulation room 333 is set in the confluence side of the core 60 as the recessed area, that is, the resin accumulation room 333 is set in the behind of the core 60 or in the portion where the molten resin injected from the gate 313 to the mold cavity 303 is flowed and branched by the core 60 to flow both side thereof as shown arrows in Fig. 10(a) and then joined.

Because the depth of this resin accumulation room 333 is deeper than the mold cavity 303 vicinity thereof, the temperature decrease of the molten resin accumulated in the accumulation room 333 is comparatively gradual and the flow velocity is comparatively high. For this reason, the molten resin come from through the both sides of the core 60 is firstly filled in the accumulation room 333 and then filled in the remaining space of the mold cavity 303 as shown in Fig. 10(a). In other words, the resin accumulation room 333 functions as a flow leader.

The movable pin 41 is installed under the resin accumulation room 333 as shown in Fig. 10(b). This movable pin 41 can be projected to the resin accumulation room 333 and then can be pulled out therefrom. In other words, the movable pin 41 is able to move up or down. The resin accumulation room 333 is filled by the movable pin 41 when the movable pin 41 is moved up. Thereby the molten resin filled in the accumulation room 333 till then is pushed out to the adjacent mold cavity 303.

In the example structure of Fig. 10(b), in the initial stage (in the bottom dead center stage), the head of the movable pin 41 is situated under the mold surface of the mold cavity 303. However, in place of that structure, in the initial stage, the head of the movable pin 41 can be situated at the same height of the mold surface of the mold cavity 303 as shown in Fig. 12(b). In that structure, the large volume being realized e.g. by enlarging its depth is required to the resin accumulation room 333b. Or the thermal conductivity of the resin accumulation room 333b being different from that of the mold surface of the mold cavity 303 by covering the diagonally dense shaded area or the top of the movable pin 41 with a heat insulator is required so that the resin accumulation room 333b can function as a flow leader. As described above, the shape of the resin accumulation room can be properly modified according to the size or shape of the hole of the target product.

The upper surface of the resin accumulation room 333 which is faced to the top of the movable pin 41 is configured as a recessed space 323. The top of the movable pin 41 projected to the resin accumulation room 333 is accepted by the recessed space 323 as shown in Figs. 10(b) and 11(b). The inside shape of this recessed space 323 just fits to the outside shape of the head of the movable pin 41, therefore, if the resin is remain in the bottom of the recessed space 323, the remaining resin is cut off when the product is taken out.

The operation of the movable pin 41 is described referring to Figs. 10 and 11.

The molten resin injected from the gate 313 is flowed in the mold cavity 303 and then flowed into the resin accumulation room 333 to fill it. Refer to the arrows and the melt front MF1 shown in the Fig. 10(a) and (b). In other words, the confluence of the melt front MF is caused in the resin accumulation room 333 that functions as a flow leader.

Thus, the molten resin joined in the resin accumulation room 333 and filled therein forms the single melt front MF2. This melt front MF2 is advanced into the mold cavity 303 to fill its remaining space. That is, the melt front MF2 is advanced to the rightward in the Figs. 10 or 11.

The pressure sensor 45 outputs the signal to the movable pin drive mechanism 40 as shown in Fig 11(b) when the single melt front of the molten resin reaches the pressure sensor 45 situated at the predetermined position. Refer to the melt front MF2. Thereby, the movable pin drive mechanism 40 is started to project the movable pin 41 into the resin accumulation room 333 and the molten resin filled in the resin accumulation room 333 until then is pushed out to the mold cavity 303.

In the shown embodiment, the time that the movable pin 41 is started to be projected to the resin accumulation room 333 to push out the molten resin therein is depend on the position of the pressure sensor 45. For this start time, the arbitrary time in the period which starts when the molten resin has filled in the resin accumulation room 333 and ends when the total amount of the molten resin injected to the mold cavity 303 reaches the amount calculated by subtracting the volume of the resin accumulation room 333 from the capacity of the mold cavity 303 can be adopted. Here, the time when the total amount of the molten resin injected to the mold cavity 303 reaches the amount calculated by subtracting the volume of the resin accumulation room 333 from the capacity of the mold cavity 303 is equal to the time when the mold cavity 303 is filled by the molten resin except but the volume corresponding to the resin accumulation room 333. In the above period, the resistance from the molten resin being pushed out against to the movable pin 41 is small enough therefore the required power to drive the movable pin 41 is comparatively small. The required power to drive the movable pin 41 is the smallest when the movable pin 41 is started immediately after the resin accumulation room 333 is filled by the molten resin. Therefore, for example, the mechanism that drives the movable pin 41 by utilizing the pressure of the molten resin can be used. Also, the movable pin drive mechanism 40 can be miniaturized and the cost can be lowered.

Examples of the mechanism to thrust the movable pin 41 or to pull down the same are shown in Fig. 13 and Fig. 14. The Fig.13 is similar to the Fig. 8 and the Fig. 14 is similar to the Fig. 9. Thus, the description of these is omitted. For information, the difference between Fig. 8 and Fig. 13 is the set position of the pressure sensor pin 451a and the target space being inserted the movable pin 41. The difference between Fig. 9 and Fig. 14 is the target space being inserted the movable pin 41.

Each of the aforementioned oil hydraulic mechanism shown in Fig. 13 or Fig. 14 can be utilized for the mechanism, which is described in the "[1] First Embodiment", that drives to go up the ditch bottom 126 or to go down the ditch bottom 126.

### USE POSSIBILITY ON THE INDUSTRY

The present invention, which relates to a mold having two or more gates, can prevent a weld, can prevent a flow mark easily and surely, can prevent a back flow of a resin injected from a second-order gate, which is added to a behind of a resin injected from a first-order gate, without any restriction about a shape of a target product and a degree of freedom of a design of a gate position.

Also, the present invention can mold a product having a through hole at low cost without causing a weld by using a comparatively small mechanism.

And also, the present invention can mold a product having a special shape that causes a branch and a confluence of a molten resin inevitably without causing a weld, without uselessly consuming the resin, at low cost, and by using a comparatively small mechanism.

## Claims

1. A mold for injection molding comprising:
a mold cavity having an inside shape fit to an outside shape of a target product; and
a temporary space being communicated with the mold cavity and is eliminated before an amount of a molten material being injected to the mold cavity reaches the capacity of the mold cavity.

2. A mold for injection molding comprising:
a mold cavity having an inside shape fit to an outside shape of a target product;
a junk cavity being communicated with the mold cavity; and
a temporary space being communicated with the mold cavity and is eliminated before an amount of a molten material being injected to the mold cavity reaches the total capacity of the mold cavity and the junk cavity.

3. A mold for injection molding according to claim 1 or 2,
wherein said mold cavity has two or more gates that can be controlled of start of injection respectively; said temporary space is a ditch having an eliminator to eliminate the ditch and being set on the surface of the mold cavity where it connects opening portions of the two gates that are mutually adjacent; a second gate which is one of said mutually adjacent two gates is set to be opened after a melt-front of a molten material injected from a first gate being the other of said two gates reaches the position of said second gate; a molten material being progressed in the ditch is pushed and returned to the mold cavity by using the eliminator; said eliminator is started when a melt-front of a molten material from said first gate reaches the position of said second gate.

4. A mold for injection molding according to claim 1 or 2,
wherein said temporary space is a ditch having an eliminator to eliminate the ditch and being set on the surface of the mold cavity where it is in the longitudinal direction from the opening portion of the gate of the mold cavity; a molten material being progressed in the ditch is pushed and returned to the mold cavity by using the eliminator; said eliminator is started when a melt-front of a molten material from said gate reaches the end of the ditch.

5. A mold for injection molding according to claim 1 or 2,
wherein said temporary space is the space being situated in the mold cavity space and delimited from the mold cavity space by a virtual boundary and eliminated at a predetermined time by an eliminator; said eliminator is a movable pin having the outside shape fit to the inside shape of the through hole of an target product and is started to be inserted to the mold cavity to occupy the temporary space when the melt front of a molten material passed the position of the temporary space.

6. A mold for injection molding according to claim 5,
wherein said movable pin is driven by an oil hydraulic mechanism being controlled by the pressure of the molten resin of the upstream side of the movable pin.

7. A mold for injection molding according to claim 1 or 2,
wherein said mold cavity has a body being corresponding to a through hole of a target product and jut into the mold cavity space to cause a branch and a confluence of the molten material; said temporary space is the space being set at the confluence side of the body to act flow leader and eliminated at a predetermined time by an eliminator; said eliminator is started to eliminate the temporary space to push and return a molten material accumulated in the temporary space to the mold cavity.

8. A mold for injection molding according to claim 7,
wherein said eliminator is driven by an oil hydraulic mechanism being controlled by the pressure of the molten resin of a predetermined portion in the mold cavity.

9. A method of injection molding by using a mold wherein a mold cavity having an inside shape fit to an outside shape of a target product, and a temporary space being communicated with the mold cavity and is eliminated before an amount of a molten material being injected to the mold cavity reaches the capacity of the mold cavity are included.

10. A method of injection molding by using a mold wherein a mold cavity having an inside shape fit to an outside shape of a target product, a junk cavity being communicated with the mold cavity, and a temporary space being communicated with the mold cavity and is eliminated before an amount of a molten material being injected to the mold cavity reaches the total capacity of the mold cavity and the junk cavity are included

11. A method of injection molding according claim 9 or 10,
wherein said mold cavity has two or more gates that can be controlled of start of injection respectively, said temporary space is a ditch having an eliminator to eliminate the ditch and being set on the surface of the mold cavity where it connects opening portions of the two gates that are mutually adjacent, said method comprising the steps of:
opening a first gate which is one of said mutually adjacent two gates to inject a molten material into the said mold cavity;
opening a second gate which is the other of said mutually adjacent two gates after the melt-front of the molten material from the first gate reaches the position of the second gate to inject a molten material into the said mold cavity; and
eliminating said ditch when the melt-front of the molten material from the first gate reaches the position of the second gate to push and return the molten material being progressed in the ditch into the mold cavity.

12. A method of injection molding according claim 9 or 10,
wherein said temporary space is a ditch having an eliminator to eliminate the ditch and being set on the surface of the mold cavity where it is in the longitudinal direction from the opening portion of the gate of the mold cavity; a molten material being progressed in the ditch is pushed and returned to the mold cavity by using the eliminator;
starting said eliminator when the melt-front of the molten material from said gate reaches the end of the ditch.

13. A method of injection molding according claim 9,
wherein said temporary space is the space being situated in the mold cavity space and delimited from the mold cavity space by a virtual boundary and eliminated at a predetermined time by an eliminator, said eliminator is a movable pin having the outside shape fit to the inside shape of the through hole of an target product, said method comprising the steps of:
opening a gate to inject a molten material into said mold cavity;
starting the insert of said movable pin to the mold cavity to occupy the temporary space in the period from when the melt front of the molten material has passed a predetermined portion to when the total amount of the molten material injected to the mold cavity reaches the amount calculated by subtracting the volume of the temporary space from the capacity of the mold cavity.

14. A method of injection molding according claim 13
wherein said movable pin is driven by an oil hydraulic mechanism being controlled by the pressure of the molten resin of the upstream side of the movable pin.

15. A method of injection molding according claim 9 or 10,
wherein said mold cavity has a body being corresponding to a through hole of a target product and jut into the mold cavity space to cause a branch and a confluence of the molten material, said temporary space is the space being set at the confluence side of the body to act flow leader and eliminated at a predetermined time by an eliminator, said method comprising the steps of:
opening a gate to inject a molten material into said mold cavity;
starting said eliminator to eliminate the temporary space to push and return a molten material accumulated in the temporary space to the mold cavity.

16. A method of injection molding according claim 15
wherein said eliminator is driven by an oil hydraulic mechanism being controlled by the pressure of the molten resin of the predetermined portion in the mold cavity.

17. A weldless product molded by one of the methods of claims 9 to 16 by using the blending material of 100 parts by mass of polymer, 0.1 to 10 parts by mass of the metallic pigment, and/or 1 to 100 parts by mass of the bulking agent.
